# EUROPÄISCHE PATENTANMELDUNG

(11) **EP 4 431 406 A1**
(43) Veröffentlichungstag der Anmeldung: **18.09.2024**
(21) Anmeldenummer: 23161490.0
(22) Anmeldetag: 13.03.2023
(51) Int. Cl.: B65B 1/18, B29C 65/08, B29C 65/00, B65B 7/02, B65B 43/54, B65B 51/22, B65B 57/04

(54) **ABFÜLLVORRICHTUNG**

(71) Anmelder: GREIF-VELOX Maschinenfabrik GmbH, 23560 Lübeck (DE)
(72) Erfinder: Boje, Alexander, 23560 Lübeck (DE); Drews, Ralf, 23560 Lübeck (DE); Mildner, Alexander, 23560 Lübeck (DE)
(74) Vertreter: Patentanwälte Hemmer Lindfeld Frese Partnerschaft mbB

(57) **Zusammenfassung**

Die Erfindung betrifft eine Abfüllvorrichtung zum Befüllen eines flexiblen Behältnisses (3), welche eine Befülleinrichtung zum Befüllen des Behältnisses (3), eine Verschließeinrichtung (6) zum Verschließen des befüllten Behältnisses (3) und zumindest eine Sensoreinrichtung (10, 11) aufweist, welche derart angeordnet ist, dass sie zumindest eine vorbestimmte Position eines Abschnittes (4) des Behältnisses (3) in der Abfüllvorrichtung erfasst, wobei Sensoreinrichtung zumindest eine Luftdüse (10, 11) aufweist, welche mit einer Druckluftzufuhr (13) verbunden ist, und dass in der Druckluftzufuhr zumindest ein Drucksensor (14) angeordnet ist.

## Beschreibung

Die Erfindung betrifft ein Abfüllvorrichtung zum Befüllen eines flexiblen Behältnisses, vorzugsweise zum Befüllen eines Ventilsackes.

Beispielsweise aus DE 20 2021 100 952 U1 ist eine Ventilsackabfüllvorrichtung bekannt, welche eine Befülleinrichtung zum Füllen und eine Verschließeinrichtung zum Verschweißen des Ventilsackes aufweist. Die Ventilsackabfüllvorrichtung weist darüber hinaus Sensoren auf, welche die richtige Positionierung des Ventilsacks relativ zu der Verschließeinrichtung erfassen. Insbesondere beim Abfüllen von pulverförmigen Stoffen kann durch Verschmutzung der Anlage die Funktion der Sensoren beeinträchtigt werden.

Vor diesem Hintergrund ist es Aufgabe der Erfindung, eine Abfüllvorrichtung zum Befüllen eines flexiblen Behältnisses bereitzustellen, welche eine zuverlässige Überwachung der Positionierung des Behältnisses zulässt.

Diese Aufgabe wird durch eine Abfüllvorrichtung mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Abfüllvorrichtung dient zum Befüllen eines flexiblen Behältnisses, beispielsweise eines Sackes, besonders bevorzugt eines Ventilsackes. Somit handelt es sich bei der Abfüllvorrichtung bevorzugt um eine Ventilsackabfüllvorrichtung.

Die Abfüllvorrichtung weist eine Befülleinrichtung zum Befüllen des Behältnisses auf. Dabei kann es sich um eine Befülleinrichtung handeln, welche beispielsweise durch Druckförderung oder auch durch Vakuumbefüllung ein Füllgut, beispielsweise ein pulverförmiges Material, in das flexible Behältnis fördert. Die Abfüllvorrichtung weist ferner eine Verschließeinrichtung auf, welche dazu ausgebildet ist, das Behältnis nach Abschluss des Befüllvorganges zu verschließen. Dabei kann es sich besonders bevorzugt um eine Verschließeinrichtung handeln, welche dazu ausgebildet ist, einen Ventilabschnitt eines Ventilsackes zu verschließen. Bei einem Ventilabschnitt handelt es sich um denjenigen Abschnitt des Behältnisses bzw. Ventilsackes, welcher mit der Befüllvorrichtung zum Befüllen verbunden wird. Darüber hinaus weist die Abfüllvorrichtung eine Sensoreinrichtung auf, welche derart ausgebildet und angeordnet ist, dass sie zumindest eine vorbestimmte Position eines Abschnittes des Behältnisses in der Abfüllvorrichtung erfasst. Das heißt die Sensoreinrichtung ist dazu ausgebildet, zu detektieren, ob sich der Abschnitt des Behältnisses in der vorbestimmten Position befindet oder nicht. Insbesondere kann die Sensoreinrichtung dazu ausgebildet sein, an einer bestimmten Position zu detektieren, ob ein Abschnitt des Behältnisses an dieser Position vorhanden ist oder nicht. Bei dem Abschnitt handelt es sich vorzugsweise um einen Ventilabschnitt eines Ventilsackes, wie er vorangehend beschrieben wurde. Gegebenenfalls können mehrere Sensoreinrichtungen vorhanden sein, um die korrekte Position des Behältnisses zu detektieren.

Erfindungsgemäß weist die Sensoreinrichtung zumindest eine Luftdüse auf, welche mit einer Druckluftzufuhr verbunden ist. In der Druckluftzufuhr ist zumindest ein Drucksensor angeordnet, welcher den Druck in der Druckluftzufuhr erfasst und es ermöglicht, den Druck in der Druckluftzufuhr zu überwachen. Wenn ein Abschnitt des Behältnisses vor die mit der Druckluftzufuhr verbundene zumindest eine Luftdüse gelangt, verändert sich der Luftdruck in der Druckluftzufuhr, wodurch das Vorhandensein des Abschnittes des Behältnisses detektiert werden kann. Ein Objekt wie der Abschnitt des Behältnisses vor der Luftdüse führt zu einem Druckanstieg in der Druckluftzufuhr. Eine solche Sensoreinrichtung, welche unter Verwendung von Luftdüsen bzw. Druckluftdüsen arbeitet, hat den großen Vorteil, dass sie verschmutzungsunempfindlich ist, da Partikel, welche sich insbesondere beim Abfüllen pulverförmiger Materialien anlagern könnten, durch den Luftstrom weggeblasen werden. Es ist zu verstehen, dass im Sinne dieser Erfindung unter Luft jedes geeignete Gas oder Gasgemisch zu verstehen ist. Bevorzugt handelt es sich um Druckluft, welche in industriellen Anlagen meist ohnehin bereitgestellt wird.

Bevorzugt weist die Abfüllvorrichtung zumindest eine mit dem zumindest einen Drucksensor verbundene Überwachungseinrichtung auf, welche derart ausgestaltet ist, dass sie einen von dem Drucksensor erfassten Druckwert überwacht und anhand eines erfassten Druckanstiegs eine Positionierung des zumindest einen Abschnittes des Behältnisses vor der Düse detektiert. Wenn die aus der Düse austretende Luft auf das vor der Düse befindliche Behältnis trifft bewirkt dies einen Staudruck, welcher zum Druckanstieg in der Druckluftzufuhr führt. Dies wird von dem Drucksensor detektiert. Wenn mehrere Luftdüsen vorhanden sind, kann jede Luftdüse eine eigene Druckluftzufuhr mit einem in dieser angeordneten Drucksensor aufweisen, so dass für jede Luftdüse der Druckanstieg einzeln detektiert werden kann. So kann durch die Anordnung mehrerer Luftdüsen die korrekte Position des Behältnisses bzw. des Abschnittes des Behältnisses erfasst werden. Es ist jedoch auch denkbar, mehrere Luftdüsen mit einer gemeinsamen Druckluftzufuhr zu verbinden und einen Drucksensor in der gemeinsamen Druckluftzufuhr zu verwenden. In einem solchen System kann die korrekte Position des Behältnisses durch einen entsprechenden Druckanstieg detektiert werden, welcher eintritt, wenn der Abschnitt des Behältnisses vor den mehreren mit der gemeinsamen Druckluftzufuhr verbundenen Luftdüsen gelegen ist. Nur in diesem Zustand wird dann eine korrekte Positionierung detektiert. Dies ermöglicht einen einfachen Anlagenaufbau.

Die Befülleinrichtung weist zweckmäßigerweise einen Füllstutzen auf, welcher derart angeordnet ist, dass er zum Befüllen in eine Öffnung des zu befüllenden Behältnisses eingreift, beispielsweise in einen Ventilabschnitt eines Ventilsackes eingreift. Dabei kommt der Füllstutzen vorzugsweise in dichte Anlage mit dem Abschnitt des Behältnisses, z.B. mit einem Ventilabschnitt eines Ventilsackes, so dass beim Befüllen vorzugsweise kein Material oder Füllgut nach außen austritt. Bevorzugt ist die Abfüllvorrichtung so ausgebildet, dass der Füllstutzen in den Ventilsack eingeführt werden kann und/oder dass der Ventilsack auf den Füllstutzen aufgeschoben werden kann. Dies kann beispielsweise durch eine Handhabungvorrichtung, welche das Behältnis bewegt, erfolgen. Die Sensoreinrichtung kann beispielsweise so angeordnet sein, dass mit ihr die korrekte Position des Abschnittes des Behältnisses relativ zu dem Füllstutzen erfasst wird. Anhand dieser Positionserfassung kann dann beispielsweise auch ein Handhabungsgerät gesteuert werden, um das Behältnis in die zum Befüllen korrekte Position bewegen zu können.

Bevorzugt ist die Sensoreinrichtung so angeordnet, dass sie die korrekte Position des Behältnisses relativ zu der Verschließeinrichtung erfasst, so dass sichergestellt wird, dass das Behältnis bzw. der Abschnitt des Behältnisses nach dem Befüllen richtig verschlossen werden kann bzw. richtig verschlossen worden ist.

Die Befülleinrichtung und die Verschließeinrichtung sind weiter bevorzugt derart angeordnet, dass zum Verschließen des Behältnisses die Verschließeinrichtung in einem Bereich vor einem Füllstutzen der Befülleinrichtung angeordnet ist. So kann das Behältnis unmittelbar nach dem Befüllen verschlossen werden, entweder, während der Abschnitt des Ventilsackes noch mit dem Füllstutzen in Eingriff ist oder unmittelbar, nachdem das Behältnis von dem Füllstutzen wegbewegt worden ist und/oder der Füllstutzen aus dem Abschnitt des Ventilsackes herausbewegt worden ist.

Gemäß einer weiteren möglichen Ausgestaltung der Erfindung ist die Verschließeinrichtung derart ausgestaltet und angeordnet, dass sich zum Verschließen ein Abschnitt des Behältnisses, beispielsweise ein Ventilabschnitt eines Ventilsackes, durch die Verschließeinrichtung hindurch erstreckt. In dieser Position kann die Verschließeinrichtung den Abschnitt verschließen. Bevorzugt ist die zumindest eine Luftdüse an der Seite der Verschließeinrichtung angeordnet, an der beim Verschließen ein freies Ende des Abschnittes des Behältnisses gelegen ist. Auf diese Weise kann erfasst werden, ob der Abschnitt sich vollständig durch die Verschließeinrichtung hindurch erstreckt, so dass der gesamte Abschnitt verschlossen wird. Insbesondere bei Verwendung eines Ventilsackes kann so festgestellt werden, dass sich der Ventilabschnitt, das heißt ein schlauchförmiger Abschnitt über seine gesamte Breite durch die Verschließeinrichtung erstreckt und damit über die gesamte Breite sicher verschlossen werden kann. Dazu können mehrere, über die Breite verteilt angeordnete Luftdüsen vorhanden sein, um die korrekte Lage des Abschnittes des Behältnisses besser erfassen zu können.

Die zumindest eine Luftdüse der Sensoreinrichtung ist weiter bevorzugt zwischen der Verschließeinrichtung und der Befülleinrichtung angeordnet. Das bedeutet, dass die Sensoreinrichtung und insbesondere deren Luftdüsen vorzugsweise an einer Seite der Verschließeinrichtung angeordnet sind, welche der Befülleinrichtung zugewandt ist. So wird erfasst, dass sich der Abschnitt des Behältnisses, welcher zu verschließen ist, vollständig durch die Verschließeinrichtung hindurch erstreckt.

Die Verschließeinrichtung kann in einer bevorzugten Ausführungsform der Erfindung als eine Schweißeinrichtung und weiter bevorzugt als eine Ultraschallschweißeinrichtung ausgebildet sein, mit deren Hilfe der Abschnitt des Behältnisses, insbesondere der Ventilabschnitt eines Ventilsackes verschweißt wird. Dazu kann die Schweißeinrichtung zwei gegenüberliegende Elemente oder Abschnitte haben, welche zum Verschweißen aufeinander zu bewegt werden, so dass der Abschnitt des Behältnisses zwischen den zwei Elementen geklemmt wird. So werden zwei oder mehrere Materiallagen des Abschnittes des Behältnisses aufeinandergedrückt und können in dieser Position verschweißt werden.

Die Verschließeinrichtung weist vorzugsweise zumindest ein Schweißelement und einen Amboss auf, welche einander gegenüberliegen und über zumindest eine Bewegungseinrichtung aufeinander zu bewegbar sind. Bei dieser Bewegung können das Schweißelement und/oder der Amboss bewegt werden. Über das Schweißelement und den Amboss werden die zwischenliegenden Materiallagen des zu verschließenden Behältnisses aufeinander gedrückt und dann durch die Schweißeinrichtung verschweißt. Das Schweißelement kann dabei beispielsweise als Heizelement zum thermischen Schweißen oder als Sonotrode zum Ultraschallschweißen ausgebildet sein. In einer möglichen Ausgestaltung der Erfindung ist das Schweißelement oberhalb des Amboss gelegen. Es ist jedoch auch eine umgekehrte Anordnung denkbar.

Gemäß einer weiteren möglichen Ausgestaltung der Erfindung ist die zumindest eine Luftdüse der Sensoreinrichtung an dem Amboss angeordnet und vorzugsweise mit ihrer Austrittsrichtung in Richtung des gegenüberliegenden Schweißelementes gerichtet. Wenn das Schweißelement oberhalb des Amboss angeordnet ist, ist die Austrittsrichtung somit nach oben gerichtet. Diese Anordnung hat den Vorteil, dass ein Behältnis, welcher über den Luftdüsen gelegen ist, durch Schwerkraft auf die Luftdüsen fällt und dort den austretenden Luftstrom derart beeinflusst, dass es zu einem erfassbaren Druckanstieg in der Druckluftzufuhr zu der Luftdüse führt. Der Luftstrom hat dabei ferner den Vorteil, dass Verschmutzungen gleich weggeblasen werden. Es ist jedoch auch eine umgekehrte Anordnung denkbar, bei welcher eine oder mehrere Luftdüsen mit ihrer Austrittsöffnung nach unten gerichtet sind. Eine solche Anordnung kann beispielsweises an einem oben liegenden Amboss oder auch an der oben angeordneten Sonotrode bzw. einem oben angeordneten Schweißelement Verwendung finden. Gegebenenfalls könnten der Amboss und ein Schweißelement auch so angeordnet sein, dass sie sich in einer Richtung quer zur Vertikalen aufeinander zu bewegen. In einer solchen Anordnung könnte die zumindest eine Luftdüse auch so angeordnet sein, dass ihre Austrittsrichtung quer zur Vertikalen gerichtet ist.

In einer weiteren möglichen Ausgestaltung der Erfindung weist die Sensoreinrichtung zumindest zwei voneinander beabstandete Luftdüsen auf, wobei die Luftdüsen vorzugsweise in einer Richtung voneinander beabstandet sind, welche parallel zu einer Erstreckungsrichtung der Verschließeinrichtung, beispielsweise eines Schweißelementes, verläuft. Auf diese Weise kann erfasst werden, dass der Abschnitt des Behältnisses über der gesamten Breite der Verschließeinrichtung von der Verschließeinrichtung, beispielsweise einem Schweißelement überdeckt wird, so dass der Abschnitt sicher verschlossen werden kann. Die Austrittsrichtungen der zumindest zwei Luftdüsen verlaufen bevorzugt im Wesentlichen parallel zueinander.

Die zumindest zwei Luftdüsen sind vorzugsweise mit einer gemeinsamen Druckluftzufuhr verbunden und in der Druckluftzufuhr ist ein Drucksensor angeordnet, mittels welchem der Druck in der gemeinsamen Druckluftzufuhr überwacht wird. Dabei kann die korrekte Positionierung des Abschnitts des Behältnisses anhand eines erfassten Druckanstieges detektiert werden, welcher dann auftritt, wenn das Behältnis beide Luftdüsen überdeckt bzw. gleichzeitig vor den zumindest zwei Luftdüsen gelegen ist. Eine entsprechende Ausgestaltung kann auch mit mehr als zwei Luftdüsen realisiert werden, beispielsweise wenn ein größerer Abschnitt des Behältnisses hinsichtlich seiner richtigen Positionierung überwacht werden soll. Anstatt einen Drucksensor in einer gemeinsamen Druckluftzufuhr zu verwenden, könnten die einzelnen Luftdüsen auch mehrere Druckluftzufuhren mit mehreren Drucksensoren aufweisen. Damit ist eine gezieltere Überwachung der aktuellen Position des Abschnittes des Behältnisses möglich, insbesondere dann, wenn die Sensorsignale zur Steuerung einer Positioniereinrichtung bzw. Handhabungsvorrichtung verwendet werden sollen.

Die zumindest zwei Luftdüsen sind vorzugsweise an einer Positioniereinrichtung befestigt, über welche der Abstand zwischen den zumindest zwei Luftdüsen veränderbar ist. So lässt sich die Position der Luftdüsen an unterschiedliche Größen von Behältnissen, beispielsweise unterschiedliche Größen von Ventilabschnitten anpassen.

Die Sensoreinrichtung und vorzugsweise die Überwachungseinrichtung, wie sie oben beschrieben wurde sind in einer weiteren möglichen Ausgestaltung mit einer Steuereinrichtung verbunden, die derart ausgestaltet ist, dass sie eine Betätigung der Verschließeinrichtung unterdrückt, solange die Sensoreinrichtung den Abschnitt des Behältnisses nicht in der vorbestimmten Position erfasst. So kann sichergestellt werden, dass die Verschließeinrichtung erst dann betätigt wird, wenn das Behältnis bzw. dessen zu verschließender Abschnitt richtig positioniert ist.

Alternativ oder zusätzlich können die Überwachungseinrichtung oder eine verbundene Steuereinrichtung so ausgebildet sein, dass sie ein Fehlersignal erzeugt, falls bei Betätigung der Verschließeinrichtung die Sensoreinrichtung den Abschnitt des Behältnisses nicht erfasst. Ein solches Fehlersignal kann darauf hindeuten, dass das Behältnis nicht richtig verschlossen wurde. Das Fehlersignal kann in einer Anlagensteuerung dazu genutzt werden, ein Aussondern des entsprechenden Behältnisses bzw. des entsprechenden Ventilsackes aus dem üblichen Handhabungsprozess zu veranlassen, beispielsweise um den Verschluss noch einmal zu überprüfen oder gegebenenfalls nachzubessern.

Nachfolgend wird die Erfindung beispielhaft anhand der beigefügten Figuren beschrieben. In diesen zeigt:
- Fig. 1: in vereinfachter schematischer Darstellung in Seitenansicht einen Teil einer Abfüllvorrichtung mit einer Befülleinrichtung sowie einer Verschließeinrichtung,
- Fig. 2: die Einzelheit II in Figur 1 in vergrößerter Darstellung, und
- Fig. 3: in perspektivischer Darstellung das Ende des Füllstutzens und die Verschließeinrichtung gemäß Figur 1.

Die anhand der Figuren beschriebene Abfüllvorrichtung ist eine Ventilsackabfüllvorrichtung, deren grundsätzlicher Aufbau zum Stand der Technik zählt. Diesbezüglich wird beispielsweise auf EP 3 581 500 A1 verwiesen.

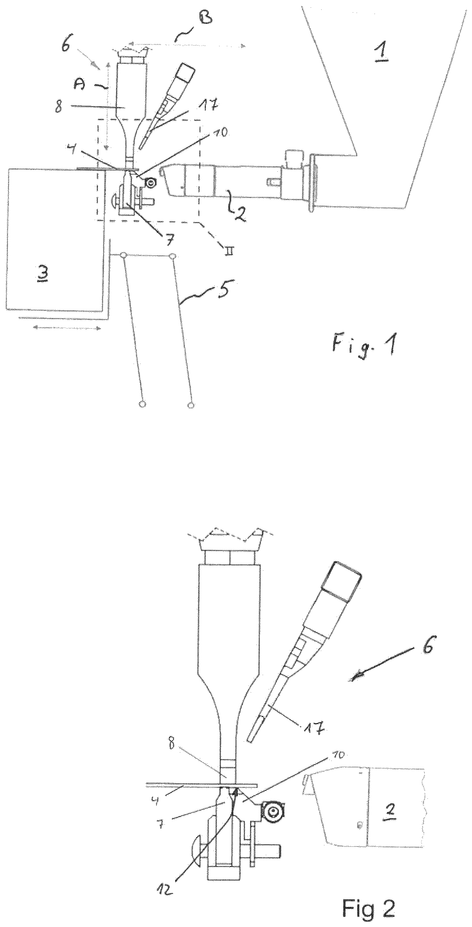

Die in den Figuren gezeigte Abfüllvorrichtung, welche als Ventilsackabfüllvorrichtung ausgebildet ist, weist eine Befülleinrichtung auf, welche hier in Form eines Produktsilos 1 und eines Füllstutzens 2 gezeigt ist. In dem Produktsilo 1 wird das abzufüllende pulverförmige Gut gelagert und über den Füllstutzen 2 in ein flexibles Behältnis, hier einen Ventilsack 3 abgefüllt. Der Ventilsack 3 weist einen schlauchförmigen Ventilabschnitt 4 auf, der während des Abfüllvorgangs den Füllstutzen 2 dicht umschließt. Das heißt, der Füllstutzen 2 greift in den Ventilabschnitt 4 dichtend ein. Während dieses Abfüllvorganges befindet sich die hier als Parallelogrammführung 5 dargestellte Handhabungsvorrichtung in einer graden bzw. nahezu rechtwinkligen Stellung, in welcher der Ventilsack 3 näher an dem Füllstutzen 2 gelegen ist, so dass der Ventilabschnitt 4 diesen Füllstutzen 2 umgreift. In dieser Stellung, in welcher der Ventilsack 3 mit Füllgut befüllt wird, ist die in den Figuren 1 und 2 links neben dem Ende des Füllstutzens 2 angeordnete Verschließeinrichtung 6 in eine inaktive Position verfahren, die in den Figuren nicht gezeigt ist. Die Verfahrbewegung ist in Figur 1 durch die Pfeile A und B angedeutet.

Die Figuren 1 und 2 zeigen eine Position des Ventilsackes 3 nach dem Befüllen, in welcher er über die Handhabungsvorrichtung 5, das heißt die Parallelogrammführung 5, um ein gewisses Maß von dem Füllstutzen 2 wegbewegt worden ist. Die Verschließeinrichtung 6 ist in Richtung der Pfeile A und B in die in Figuren 1 und 2 gezeigte Verschließposition bewegt worden. In dieser Position wird der Ventilabschnitt 4 des Ventilsacks 3 durch die Verschließeinrichtung 6 verschweißt und damit verschlossen. Der das Füllventil bildende Ventilabschnitt 4 ist in der gezeigten Position von dem Füllstutzen 2 abgezogen, so dass das freie Ende des Füllstutzens vom freien Ende des Ventilabschnittes 4 beabstandet ist.

Die Verschließeinrichtung 6 ist als Ultraschallschweißeinrichtung ausgebildet und weist einen Amboss 7 sowie ein oberhalb des Amboss 2 angeordnetes Schweißelement in Form einer Sonotrode 8 auf. Der Amboss 7 wird von unten an den Ventilabschnitt 4 herangeführt und die Sonotrode 8 wird vertikal von oben herangeführt, so dass der Amboss 2 und die Sonotrode 8 soweit aufeinander zubewegt werden, bis der schlauchförmige Ventilabschnitt 4 zwischen Amboss 7 und Sonotrode 8 geklemmt wird und dann durch Aktivierung der Sonotrode 8 verschweißt wird. Die Sonotrode 8 bringt die Schweißenergie auf, um den plattgedrückten Ventilabschnitt 4 mit Ultraschallschweißung zu verschweißen, wobei vorzugsweise eine Innenbeschichtung des aus Papier ausgebildeten Ventilsacks dicht verschweißt wird.

Um sicherzustellen, dass der Ventilabschnitt 4 in der in Figur 2 gezeigten Position zwischen dem Amboss 7 und der Sonotrode 8 gelegen ist, ist erfindungsgemäß eine Sensoreinrichtung vorhanden. Die Sensoreinrichtung besteht aus zwei Luftdüsen 10 und 11, welche am Amboss 7 befestigt sind und mit diesem bewegt werden können. Die Luftdüsen 10 und 11 weisen nach oben gerichtete Austrittsöffnungen 12, d.h. nach oben gerichtete Austrittsrichtungen auf. Die Luftdüsen 10 und 11 sind mit den Austrittsöffnungen 12 derart nah am Amboss 7 angeordnet, dass sie gemeinsam mit dem Amboss 7 der Sonotrode 8 gegenüberliegen. Der Amboss 7 ist schmaler als die Sonotrode 8 ausgebildet, so dass die Sonotrode 8 Teile der Luftdüsen 10 und 11, und insbesondere teilweise deren Austrittsöffnungen 12 überdeckt. Wenn kein Material des Ventilabschnittes 4 zwischen der Sonotrode 8 und den Austrittsöffnungen 12 der Luftdüsen 10 und 11 gelegen ist, ist in diesem Bereich ein Luftspalt vorhanden, durch welchen die Luft, welche aus den Austrittsöffnungen 12 ausströmt, abfließen kann.

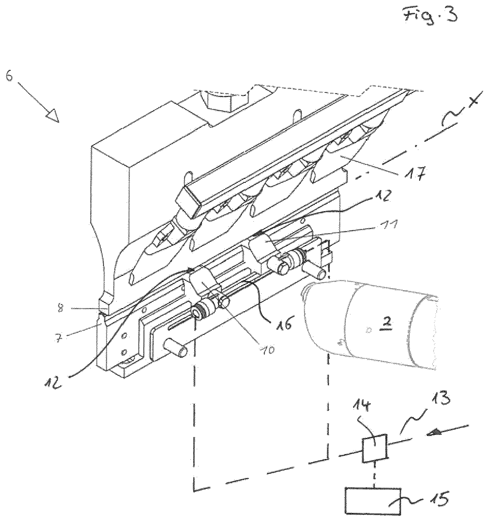

Die Luftdüsen 10 und 11 sind, wie in Figur 3 schematisch gezeigt, mit einer Druckluftzufuhr 13 verbunden. In dieser gemeinsamen Druckluftzufuhr 13 ist ein Drucksensor 14 angeordnet, welcher mit einer Überwachungseinrichtung 15 verbunden ist. Wenn, wie in Figur 2 gezeigt, der Ventilabschnitt 4 in der vorbestimmten Position gelegen ist, in welcher ein ordnungsgemäßer Schweißvorgang durchgeführt werden kann, überdeckt der Ventilabschnitt 4 die Austrittsöffnungen 12 der Luftdüsen 10 und 11. Dies führt in der Druckluftzufuhr 13 zu einem Druckanstieg, welcher über den Drucksensor 14 von der Überwachungseinrichtung 15 detektiert wird. So kann die Überwachungseinrichtung 15 detektieren, ob der Ventilabschnitt 4 richtig platziert ist. Wenn die Luftdüsen 10, 11 bzw. deren Austrittsöffnungen 12 nicht von einem Ventilabschnitt 4 überdeckt oder nicht vollständig von dem Ventilabschnitt 4 überdeckt werden, verbleibt zwischen der Sonotrode 8 und den Austrittsöffnungen 12, wie beschrieben, ein Luftspalt, so dass kein oder nur ein geringerer Druckanstieg in der Druckluftzufuhr 13 von dem Drucksensor 14 detektiert wird. So kann die Überwachungseinrichtung 15 feststellen, dass der Ventilabschnitt 4 nicht in der vorgesehenen Position gelegen ist. Die Überwachungseinrichtung 15 kann ein Fehlersignal ausgeben, welches genutzt wird, um den Schweißvorgang zu blockieren bis der Ventilabschnitt 4 in der definierten Position ist, oder um nach dem Schweißvorgang den zugehörigen Ventilsack 3 zur Überprüfung oder Aussonderung auszusortieren.

Anstelle einer gemeinsamen Druckluftzufuhr 13 mit einem Drucksensor 14 könnte ach jede der Luftdüsen 10, 11 eine separate Druckluftzufuhr mit jeweils einem darin angeordneten Drucksensor aufweisen. Eine solche Anordnung würde es ermöglichen, an jeder Luftdüse 10, 11 unabhängig die Überdeckung durch den Ventilabschnitt 4 zu detektieren.

Die beiden Luftdüsen 10 und 11 sind an einer Schiene 16 verschiebbar gehalten, so dass der Abstand zwischen den beiden Luftdüsen 10 und 11 verändert werden kann, um die Sensoreinrichtung an verschiedene Breiten von Ventilabschnitten 4 anpassen zu können. Die Verschieberichtung, welche durch die Schiene 16 definiert wird, erstreckt sich dabei parallel zu der Achse X, entlang derer sich die Längsausdehnung von Amboss 7 und Sonotrode 8 erstreckt.

Oberhalb der Sonotrode 8 ist eine weitere Düsenanordnung 17 platziert, welche eine nach unten gerichtete Ausströmrichtung aufweist. Diese Düsenanordnung 17 erzeugt einen auf den Schweißbereich gerichteten Luftstrom, welcher dazu dient in diesem Bereich befindliche Füllgutreste zu entfernen. Gleichzeitig drückt der Luftstrom den Ventilabschnitt 4 an seinem freien Ende nach unten.

### Bezugszeichenliste

- 1: Produktsilo
- 2: Füllstutzen
- 3: Ventilsack
- 4: Ventilabschnitt
- 5: Parallelogrammführung, Handhabungseinrichtung
- 6: Verschließeinrichtung
- 7: Amboss
- 8: Sonotrode
- 10, 11: Luftdüsen
- 12: Austrittsöffnungen
- 13: Druckluftzufuhr
- 14-: Drucksensor
- 15: Überwachungseinrichtung
- 16: Schiene
- 17: Düsenanordnung
- A, B: Bewegungsrichtungen, Verfahrbewegungen
- X: Erstreckungsrichtung von Amboss 7 und Sonotrode 8

## Patentansprüche

1. Abfüllvorrichtung zum Befüllen eines flexiblen Behältnisses (3), welche eine Befülleinrichtung zum Befüllen des Behältnisses (3), eine Verschließeinrichtung (6) zum Verschließen des befüllten Behältnisses (3) und zumindest eine Sensoreinrichtung (10, 11) aufweist, welche derart angeordnet ist, dass sie zumindest eine vorbestimmte Position eines Abschnittes (4) des Behältnisses (3) in der Abfüllvorrichtung erfasst,
**dadurch gekennzeichnet, dass**
Sensoreinrichtung zumindest eine Luftdüse (10; 11) aufweist, welche mit einer Druckluftzufuhr (13) verbunden ist, und dass in der Druckluftzufuhr (13) zumindest ein Drucksensor angeordnet ist.

2. Abfüllvorrichtung nach Anspruch 1, **gekennzeichnet durch** zumindest eine mit dem Drucksensor (14) verbundene Überwachungseinrichtung (15), welche derart ausgestaltet ist, dass sie einen von dem Drucksensor (14) erfassten Druckwert überwacht und anhand eines erfassten Druckanstiegs eine Positionierung des zumindest einen Abschnittes (4) des Behältnisses (3) vor der Düse (10, 11) detektiert.

3. Abfüllvorrichtung nach Anspruch 1 oder 2, **dadurch gekennzeichnet, dass** die Befülleinrichtung einen Füllstutzen (2) aufweist, welcher derart angeordnet ist, dass er zum Befüllen in eine Öffnung des zu befüllenden Behältnisses (3) eingreift.

4. Abfüllvorrichtung nach einem der vorangehenden Ansprüche, **dadurch gekennzeichnet, dass** die Befülleinrichtung und die Verschließeinrichtung (6) derart angeordnet sind, dass zum Verschließen des Behältnisses (3) die Verschließeinrichtung (6) in einem Bereich vor einem Füllstutzen (2) der Befülleinrichtung angeordnet ist.

5. Abfüllvorrichtung nach einem der vorangehenden Ansprüche, **dadurch gekennzeichnet, dass** die Verschließeinrichtung (6) derart ausgestaltet und angeordnet ist, dass sich zum Verschließen ein Abschnitt (4) des Behältnisses (3) durch die Verschließeinrichtung (6) hindurch erstreckt, und dass die zumindest eine Luftdüse (10, 11) an der Seite der Verschließeinrichtung (6) angeordnet ist, an der beim Verschließen ein freies Ende des Abschnittes (4) gelegen ist.

6. Abfüllvorrichtung nach einem der vorangehenden Ansprüche, **dadurch gekennzeichnet, dass** die zumindest eine Luftdüse (10, 11) der Sensoreinrichtung zwischen der Verschließeinrichtung (6) und der Befülleinrichtung (2) angeordnet ist.

7. Abfüllvorrichtung nach einem der vorangehenden Ansprüche, **dadurch gekennzeichnet, dass** die Verschließeinrichtung (6) als Schweißeinrichtung und vorzugsweise als eine Ultraschallschweißeinrichtung ausgebildet ist.

8. Abfüllvorrichtung nach einem der vorangehenden Ansprüche, **dadurch gekennzeichnet, dass** die Verschließeinrichtung (6) zumindest ein Schweißelement (8) und einen Amboss (7) aufweist, welche einander gegenüberliegen und über zumindest eine Bewegungseinrichtung aufeinander zu bewegbar sind.

9. Abfüllvorrichtung nach Anspruch 8, **dadurch gekennzeichnet, dass** das zumindest eine Schweißelement (8) oberhalb des Ambosses (7) gelegen ist.

10. Abfüllvorrichtung nach Anspruch 8 oder 9, **dadurch gekennzeichnet, dass** das zumindest eine Schweißelement eine Sonotrode (8) ist.

11. Abfüllvorrichtung nach einem der Ansprüche 8 bis 10, **dadurch gekennzeichnet, dass** die zumindest eine Luftdüse (10, 11) der Sensoreinrichtung an dem Amboss (7) angeordnet ist und vorzugsweise mit ihrer Austrittsrichtung nach oben gerichtet ist.

12. Abfüllvorrichtung nach einem der Ansprüche 8 bis 11, **dadurch gekennzeichnet, dass** die zumindest eine Luftdüse (10, 11) dem zumindest eine Schweißelement (8) gegenüberliegt.

13. Abfüllvorrichtung nach einem der vorangehenden Ansprüche, **dadurch gekennzeichnet, dass** die Sensoreinrichtung zumindest zwei voneinander beabstandete Luftdüsen (10, 11) aufweist, wobei die Luftdüsen (10, 11) vorzugsweise in einer Richtung beabstandet sind, welche parallel zu einer Erstreckungsrichtung (X) der Verschließeinrichtung (6) verläuft.

14. Abfüllvorrichtung nach Anspruch 13, **dadurch gekennzeichnet, dass** die zumindest zwei Luftdüsen (10, 11) an einer Positioniereinrichtung (16) befestigt sind, über welche der Abstand zwischen den zumindest zwei Luftdüsen (10, 11) veränderbar ist.

15. Abfülleinrichtung nach einem der vorangehenden Ansprüche, **dadurch gekennzeichnet, dass** die Sensoreinrichtung mit einer Steuereinrichtung verbunden ist, welche derart ausgestaltet ist, dass sie eine Betätigung der Verschließeinrichtung (6) unterdrückt, solange die Sensoreinrichtung den Abschnitt (4) des Behältnisses (3) nicht erfasst, oder ein Fehlersignal zu erzeugen, falls bei Betätigung der Verschließeinrichtung (6) die Sensoreinrichtung den Abschnitt (4) des Behältnisses (3) nicht erfasst.
